**Europäisches Patentamt**

**European Patent Office**

**Office européen des brevets**

(19)

(11) Publication number : **0 378 907 B1**

## (12) EUROPEAN PATENT SPECIFICATION

(45) Date of publication of patent specification :
**12.08.92 Bulletin 92/33**

(51) Int. Cl.⁵ : **F16B 13/06**

(21) Application number : **89312699.5**

(22) Date of filing : **06.12.89**

(54) Blind anchors for fixing screws.

(30) Priority : **21.12.88 FR 8816936**
**09.09.89 GB 8920437**

(43) Date of publication of application :
**25.07.90 Bulletin 90/30**

(45) Publication of the grant of the patent :
**12.08.92 Bulletin 92/33**

(84) Designated Contracting States :
**BE CH DE ES FR GB IT LI NL SE**

(56) References cited :
**FR-A- 2 546 989**
**US-A- 3 385 156**

(73) Proprietor : **EMHART INC.**
**Drummond Plaza Office Park, 1423, Kirkwood Highway**
**Newark, Delaware 19711 (US)**
(84) **BE CH DE ES FR GB IT LI NL SE**

(72) Inventor : **Anquetin, Robert Paul**
**15, Rue Jean-Sébastien Bach**
**Etrechy (Essonne) (FR)**

(74) Representative : **Wetters, Basil David Peter et al**
**Emhart Patents Department, Lyn House, 39, The Parade**
**Oadby, Leicester LE2 5BB (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to blind anchors for fixing screws.

More precisely, these anchors are of the type comprising a head sleeve, a tail sleeve coaxial with the head sleeve, and longitudinal ribs which connect the head sleeve to the tail sleeve and are arranged round the axis of said head sleeve and tail sleeve and which can be collapsed, the head sleeve having a flange for fixing the anchor in a partition and the tail sleeve being tapped so as to engage a screw passing freely through the head sleeve.

Such an anchor produced from a single sheet metal strip is described in French Patent No. 84 08 734 (publication No. 2 546 989) which discloses a blind fixing anchor comprising a head sleeve, a tail sleeve coaxial with the head sleeve, and collapsible longitudinal ribs which connect the head sleeve to the tail sleeve and are arranged round the axis of said head sleeve and tail sleeve, the head sleeve having a flange for locating the anchor in a partition and the tail sleeve being tapped so as to engage a screw passing freely through the head sleeve and wherein the anchor is of unitary construction produced by a series of operations on a single metal strip.

As is known, to install such anchors, a hole is initially drilled in the hollow partition intended to receive it, the anchor is then driven through this partition until the fixing points whith which its head sleeve is equipped are submerged in the partition and thus secure the anchor against rotation. To fix the anchor in position, it is merely necessary either to turn the screw in the tail sleeve until resistance is met, indicating that the ribs have been collapsed in umbrella fashion against the internal surface of the hollow partition, or to pull the tail sleeve axially using a screw integrated in a special tool until the ribs are collapsed against the internal surface of the partition to fix the anchor securely in position.

To install the anchor, it is therefore necessary to have a drill.

The object of the invention is to provide a blind fixing anchor for screws which can be installed without the need for a drill.

US patent specification 3 385 156 discloses a self-drilling anchor bolt assembly provided with a rotatory cutting head.

According to the present invention, we provide a blind fixing anchor comprising a head sleeve, a tail sleeve coaxial with the head sleeve, and collapsile longitudinal ribs which connect the head sleeve to the tail sleeve and are arranged round the axis of said head sleeve and tail sleeve, the head sleeve having a flange for locating the anchor in a partition and the tail sleeve being tapped so as to engage a screw passing freely through the head sleeve and wherein the anchor is of unitary construction produced by a series of operation on a single meatl strip characterised in that two diametrically opposed cutting teeth are formed integrally in the outer edge of the tail sleeve in its end remote from the head sleeve by a further operation on the same, single metal strip, said cutting teeth being disposed in an axial direction pointing away from said head sleeve.

The arrangement of the cutting teeth in the end of the tail sleeve also enhances the removal of extraneous material created by the formation of the hole in the partition to which the anchor is to be attached.

Additionally, the screw may be provided with an extended tip, protruding axially beyond the tail sleeve and thus providing means for guiding the anchor through the partition to which the anchor is to be fastened.

To install an anchor according to the present invention, its tip is firstly driven into the partition, or the hollow wall, for example by means of a screwdriver and then the anchor assembly is rotated while maintaining the pressure in order to enable the cutting tooth or teeth to penetrate the partition after several turns. The hole so formed in the partition is thus the correct size to receive the body of the anchor. Once the anchor has been driven home, that isn when the flange engages the partition, the points in the flange are driven into the partition and secure to enchor against rotation.

This anchor can be installed in a support of soft material, for example, plaster-board, particularly easily and without a drill.

In order that the present invention be better understood, a preferred embodiment will now be described in greater detail with reference to the accompanying drawings in which:

Figure 1 is a perspective view of an anchor according to the invnetion, on an enlarged scale, and

Figure 2 to 5 are full-size views of a sequence for the installation of the anchor of Figure 1 in a hollow partition, Figure 2 being a longitudinal section and Figure 3 to 5 being schematic views of the anchor shown in Figure 2.

A blind screw anchor 6 shown in the drawings is intended for the bind installation of a screw in a hollow partition 7 made of a soft material such as plaster-board.

Anchor 6 comprises a head sleeve 8 and a tail sleeve 9, which are coaxial, having an axis X-X, and several longitudinal ribs 10 which connect head sleeve 8 to tail sleeve 9 and are arranged round the common axis thereof, X-X.

The ribs 10 may be collapsed so as to allow head sleeve 8 and tail sleeve 9 to move closer together. Head sleeve 8 is provided with a radial flange 11 for fixing the anchor in partition 7 by means of points 12 cut out in the periphery of flange 11.

Tail sleeve 9 is tapped so that it can engage a screw 13 passing freely through the head sleeve 8.

Anchor 1 can readily be produced from a single sheet metal strip, by the process described in French patent 2 546 989.

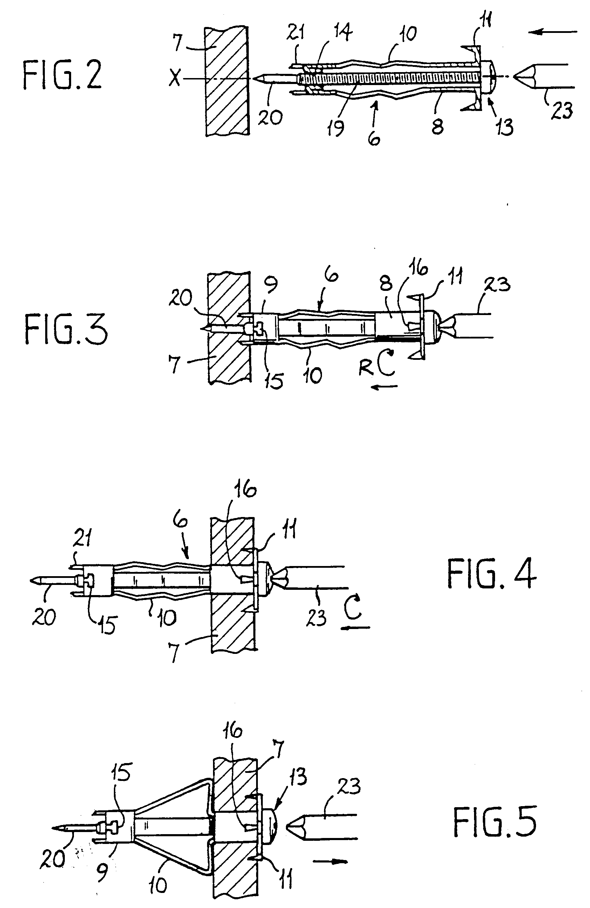

Tail sleeve 9 comprises an internal tapped collar 14 (Figure 2) for the reception of screw 13, said collar 14 being fixed to the external portion of sleeve 9 by a joint which is sufficiently strong to prevent collar 14 from being disconnected by the axial thrust exerted on the screw 8 during installation of the anchor.

This joint can be formed, for example, by at least one tab 15 which has a T-shaped profile and is produced in one piece with collar 14 and is inserted into a corresponding opening in tail sleeve 9.

As tail sleeve 9 is produced integrally with tapped collar 14, the joint is completed on the side remote from tab 15 by a bow piece (not shown in the drawings).

The flange 11 of head sleeve 8 is connected to head sleeve 8 by means which allow this flange to be separated, if required, from the remainder of the anchor 6 by means of a tool such as a screwdriver. This possibility of separation is in fact of interest if, after the anchor has been used for some time, the article attached to screw 13 is removed and the hole left after extraction of the screw is to be filled without leaving a visible trace (presence of the flange 11 on the wall).

In the example described, these means comprise at least one dovetail joint 16 obtained by cut-out 17 in flange 11 which is folded back into a complementary notch in head sleeve 8. In a preferred embodiment, two diametrically opposed dovetails 16 are preferably cut out in the flange 11 as well as two notches in the sleeve 8. In fact, such a joint can easily be broken by any tool.

Screw 13, the head 18 of which may be formed with an intended cross-shaped notch, has its shank 19 extended by a tip 20 which may be used to guide the anchor through partition 7. Tip 20 can be produced in one part with screw 13, or can be a separate piece joined to it by e.g. welding.

In addition, the anchor is provided with means for drilling the partition 7 after the tip 20 has penetrated it, the drilling means comprising two diametrically opposed, cutwardly- directed cutting teeth 21 provided on the end of tail sleeve 9 remote from head sleeve 8 (the sleeves 8 and 9 being essentially cylindrical) and pointing in an axial direction pointing away from said head sleeve. Each tooth 21 is conveniently formed by cutting tabs in the sheet of metal strip used to produce tail sleeve 9 and bending these tabs to lie parallel to the X-X axis of the anchor. Each tooth 21 is given a cutting edge 22 which is inclined to the axis X-X of the screw.

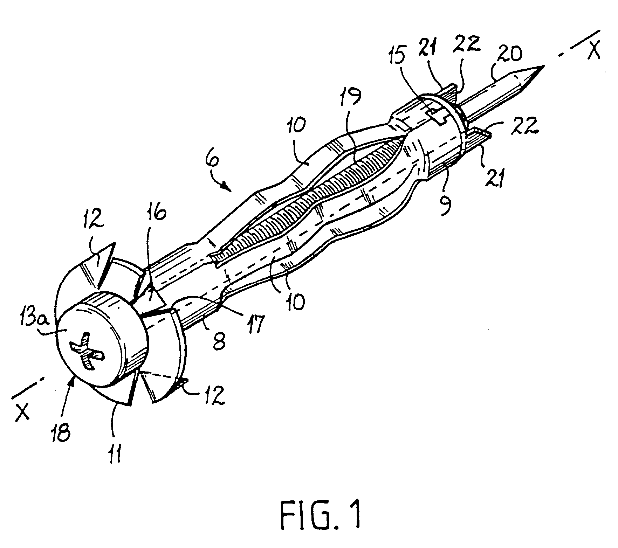

When scew 13 is driven completely into the anchor 1, the threaded end 19 of its shank is engaged in the corresponding tapping of tail sleeve 9, and tip 20 project axially between the teeth 21, as shown in Figure 1.

The anchor just described is used in the following manner.

The anchor 6 equipped with its pointed screw 13 is placed in the position to be drilled (Figure 2) and tip 20 placed against partition 7 at the precise point of installation. A screwdriver 23 is then engaged with head 18 of screw 13 and the anchor is pushed by means of the screwdriver 23 so that the guiding tip 20 completely penetrates into partition 7 (Figure 3).

Light pressure is maintained while rotation of the assembly is continued (arrow R in Figure 3). Partition 7 is perforated by the cutting edges 22 after four or five turns of the anchor 1 about its axis, and a final axial thrust on the anchor has the effect of placing the head flange 11 against partition 7 into the material of which the points 12 sink (Figure 4), thus preventing further rotation of the anchor.

A this time, the ribs 10 have passed completely chrough to the side of the internal surface of the hollow partition 7, the thickness of which corresponds substantially to the length of the head sleeve 8. The screw 13 is then turned by means of screwdriver 23, causing the ribs 10 to buckle and to collapse in an umbrella shape against the internal surface of partition 7 (Figure 5). Installation is complete when the ribs 10 are fully collapsed and exert sufficient pressure to secure the anchor in position.

Since a blind fixing anchor according to the invention can be installed without a drill, it can be installed in a location where there is no electricity supply.

## Claims

1. A blind fixing anchor comprising a head sleeve (8), a tail sleeve (9) coaxial with the head sleeve, and collapsible longitudinal ribs (10) which connect the head sleeve to the tail sleeve and are arranged round the axis (X-X) of said head sleeve and tail sleeve, the head sleeve having a flange (11) for locating the anchor in a partition (7) and the tail sleeve being tapped so as to engage a screw (13) passing freely through the head sleeve (8) and wherein the anchor is of unitary construction produced by a series of operations on a single metal strip characterised in that two diametrically opposed cutting teeth (21) are formed integrally in the outer edge of the tail sleeve (9) in its end remote from the head sleeve (8) by a further operation on the same, single metal strip, said cutting teeth (21) being disposed in an axial direction pointing away from said head sleve (8).

2. A fixing anchor according to claim 1, wherein the screw (13) is provided with an extended tip (20), protruding axially beyond the tail sleeve (9) and thus providing means for guiding the anchor through the partition (7) to which the anchor is to be fastened.

## Patentansprüche

1. Blindanker mit einer Kopfhülse (8), einer endseitigen Hülse (9), die koaxial mit der Kopfhülse ist und mit eindrückbaren, längs verlaufenden Stegen, welche die Kopfhülse mit der endseitigen Hülse verbinden und um die Achse (X-X) der Kopfhülse und der endseitigen Hülse angeordnet sind, wobei die Kopfhülse einen Flansch (11) zum Anordnen eines Ankers in einer Trennwand (7) aufweist, und die endseitige Hülse zum Eingriff mit einer sich frei durch die Kopfhülse (8) erstreckenden Schraube mit einem Gewinde versehen ist, und wobei der Anker unitärer Konstruktion ist und mit einer Reihe von Arbeitsgängen aus einem einzigen Metallstreifen gefertigt ist, dadurch gekennzeichnet, daß diametral gegenüberliegende Schneidzähne (21) einstückig im äußeren Rand der endseitigen Hülse (9) an der Kopfhülse (8) mittels eines weiteren Arbeitsganges an dem gleichen Metallstreifen ausgebildet sind, und daß die Schneidzähne (21) in einer von der Kopfhülse (8) fortweisenden Axialrichtung angeordnet sind.

2. Blindanker nach Anspruch 1, dadurch gekennzeichnet, daß die Schraube (13) mit einer Spitze (20) versehen ist, welche sich über die endseitige Hülse (9) hinaus erstreckt und somit eine Einrichtung zum Führen des Ankers durch die Trennwand schafft, an welcher der Anker festzulegen ist.

## Revendications

1. Cheville d'ancrage aveugle qui comprend une douille (8) de tête, une douille (9) de queue disposée coaxialement par rapport à la douille de tête, et des branches longitudinales (10) reliant la douille de tête à la douille de queue, disposées autour de l'axe (X-X) des dites douilles de tête et de queue et pouvant être déformées, la douille de tête comprenant une collerette (11) permettant de fixer la cheville d'ancrage dans une cloison (7), et la douille de queue étant taraudée de façon à s'engager sur une vis (13) passant librement à travers la douille (8) de tête, la cheville d'ancrage étant réalisée, par l'intermédiaire d'une série d'opérations, à partir d'une bande unique de tôle métallique, caractérisée en ce que deux dents (21) de coupe diamétralement opposées font partie intégrante du bord extérieur de la douille (9) de queue, à l'extrémité de celle-ci qui est distale par rapport à la douille (8) de tête, ces dents étant formées grâce à une autre opération dans la même bande unique de tôle métallique, et lesdites dents (21) de coupe étant disposées dans le sens axial, dirigées en direction opposée par rapport à ladite douille (8) de tête.

2. Cheville d'ancrage selon la revendication 1, caractérisée en ce que la vis (13) est pourvue d'un prolongement en forme de pointe (20) se projetant axialement au-delà de la douille (9) de queue, fournissant ainsi des moyens pour guider la cheville d'ancrage à travers la cloison (7) dans laquelle la cheville d'ancrage doit être fixée.

FIG. 1

FIG.2

FIG.3

FIG. 4

FIG.5